# EUROPEAN PATENT APPLICATION

(11) **EP 1 533 071 A2**
(43) Date of publication of application: **25.05.2005**
(21) Application number: 04256954.1
(22) Date of filing: 10.11.2004
(51) Int. Cl.: B23P 6/00, F01D 5/00

(54) **Method for repairing gas turbine rotor blades**

(30) Priority: 14.11.2003 US 713493
(71) Applicant: GENERAL ELECTRIC COMPANY, Schenectady, NY 12345 (US)
(72) Inventor: Trewiler, Gary Edward, Loveland, Ohio 45140 (US); Ferrigno, Stephen Joseph, Cincinnati, Ohio 45251 (US); Wilkins, Melvin Howard, Loveland, Ohio 45140 (US); Stewart, Matthew, Cincinnati Ohio 45213 (US)
(74) Representative: Pedder, James Cuthbert

(57) **Abstract**

A method for replacing a portion of a gas turbine engine rotor blade, the rotor blade having a contour defined by a blade first sidewall (70) and a blade second sidewall (70) includes cutting through the rotor blade such that a cut line (110) extends from a leading edge (74) of the blade to a trailing edge (76) of the blade, and between the first sidewall and the second sidewall, removing the portion of the rotor blade that is radially outward of the cut line, and coupling a replacement blade portion (120) to remaining blade portion (98) such that the newly formed rotor blade (150) is formed with a predetermined aerodynamic contour.

## Description

This application relates generally to gas turbine engines and, more particularly, to methods for repairing gas turbine engine rotor blades.

At least some known gas turbine engines include a compressor for compressing air which is mixed with a fuel and channeled to a combustor wherein the mixture is ignited within a combustion chamber for generating hot combustion gases. The hot combustion gases are channeled downstream to a turbine, which extracts energy from the combustion gases for powering the compressor, as well as producing useful work to propel an aircraft in flight or to power a load, such as an electrical generator.

Known compressors include a rotor assembly that includes at least one row of circumferentially spaced rotor blades. Each rotor blade includes an airfoil that includes a pressure side, and a suction side connected together at leading and trailing edges. Each airfoil extends radially outward from a rotor blade platform. Each rotor blade also includes a dovetail that extends radially inward from a shank coupled to the platform. The dovetail is used to mount the rotor blade within the rotor assembly to a rotor disk or spool. In at least some known compressors, the rotor blade is formed integrally with the rotor disk or spool.

During operation, leading and trailing edges of the blade and/or a tip of the compressor blade may deteriorate or become damaged due to any of a number of distress modes, including, but not limited to, foreign object damage (FOD), tip rubbing, oxidation, thermal fatigue cracking, or erosion caused by abrasives and corrosives in the flowing gas stream. To facilitate mitigating such operational effects, the blades are periodically inspected for damage, and a determination of an amount of damage and/or deterioration is made. If the blades have lost a substantial quantity of material they are replaced. If the blades have only lost a small quantity material, they may be returned to service without repair. Alternatively, if the blades have lost an intermediate quantity of material, the blades may be repaired.

For example, at least one known method of repairing a turbine compressor blade includes mechanically removing, such as by grinding, a worn and/or damaged tip area and then adding a material deposit to the tip to form the tip to a desired dimension. The material deposit may be formed by several processes including welding and/or thermal spraying. Furthermore, special tooling is also used to achieve the precise dimensional relations between the original portion of the compressor blade and the added portion of the compressor blade. Thus, replacing a portion of a compressor blade may be a time-consuming and expensive process. Additionally, more complex airfoil shapes, for example three-dimensional aerodynamic configurations may increase the difficulty of welding and blending the repaired blade, thus resulting in increased repair costs.

In one aspect of the invention, a method for replacing a portion of a gas turbine engine rotor blade, the rotor blade having a contour defined by a blade first sidewall and a blade second sidewall is provided. The method includes cutting through the rotor blade such that a cut line extends from a leading edge of the blade to a trailing edge of the blade, and between the first sidewall and the second sidewall, removing the portion of the rotor blade that is radially outward of the cut line, and coupling a replacement blade portion to remaining blade portion such that the newly formed rotor blade is formed with a pre-determined aerodynamic contour.

In another aspect, a method for replacing a portion of a gas turbine engine rotor blade including a leading edge, a trailing edge, a first sidewall, and a second sidewall, and having a contour defined by the first sidewall and the second sidewall is provided. The method includes uncoupling the rotor blade from the gas turbine engine, cutting through the rotor blade such that a cut line extends from the leading edge to the trailing edge, and between the first sidewall and the second sidewall, removing the portion of the rotor blade radially outward of the cut line, coupling a replacement blade portion to the remaining blade portion, and contouring the replacement blade portion such that the newly formed rotor blade is formed with a pre-determined aerodynamic contour.

In a further aspect, a method for replacing a portion of a gas turbine engine rotor blade including a leading edge, a trailing edge, a first sidewall, and a second sidewall, and having a contour defined by the first sidewall and the second sidewall is provided. The method includes uncoupling a compressor rotor blade from the gas turbine engine, cutting through a portion of the rotor blade such that a cut line extends from the leading edge to the trailing edge, and between the first sidewall and the second sidewall, removing a portion of the rotor blade radially outward of the cut line, welding a replacement blade portion to the portion of the compressor rotor blade remaining, and contouring the replacement blade portion such that the newly formed compressor rotor blade has a contour that substantially mirrors that of the original compressor rotor blade contour.

The invention will now be described in greater detail, by way of example, with reference to the drawings, in which:-
Figure 1 is schematic illustration of a gas turbine engine.
Figure 2 is an enlarged perspective view of an exemplary rotor blade that may be used with the gas turbine engine shown in Figure 1.
Figure 3 is an enlarged perspective view of a damaged rotor blade that was removed from the gas turbine engine shown in Figure 1.
Figure 4 is an enlarged perspective view of the rotor blade shown in Figure 3, repaired using the methods described herein.

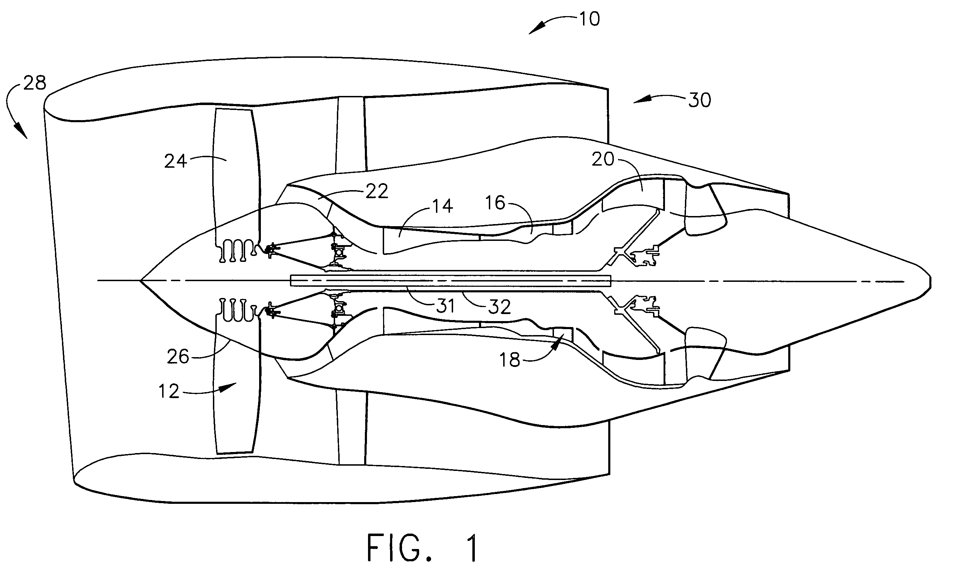

Figure 1 is a schematic illustration of a gas turbine engine 10 including a fan assembly 12, a high pressure compressor 14, and a combustor 16. Engine 10 also includes a high pressure turbine 18, a low pressure turbine 20, and a booster 22. Fan assembly 12 includes an array of fan blades 24 extending radially outward from a rotor disc 26. Engine 10 has an intake side 28 and an exhaust side 30. In one embodiment, the gas turbine engine is a GE90 available from General Electric Company, Cincinnati, Ohio. In an alternative embodiment, engine 10 includes a low pressure compressor. Fan assembly 12 and turbine 20 are coupled by a first rotor shaft 31, and compressor 14 and turbine 18 are coupled by a second rotor shaft 32.

In operation, air flows through fan assembly 12 and compressed air is supplied to high pressure compressor 14 through booster 22. The highly compressed air is delivered to combustor 16. Airflow (not shown in Figure 1) from combustor 16 drives turbines 18 and 20, and turbine 20 drives fan assembly 12 by way of shaft 31.

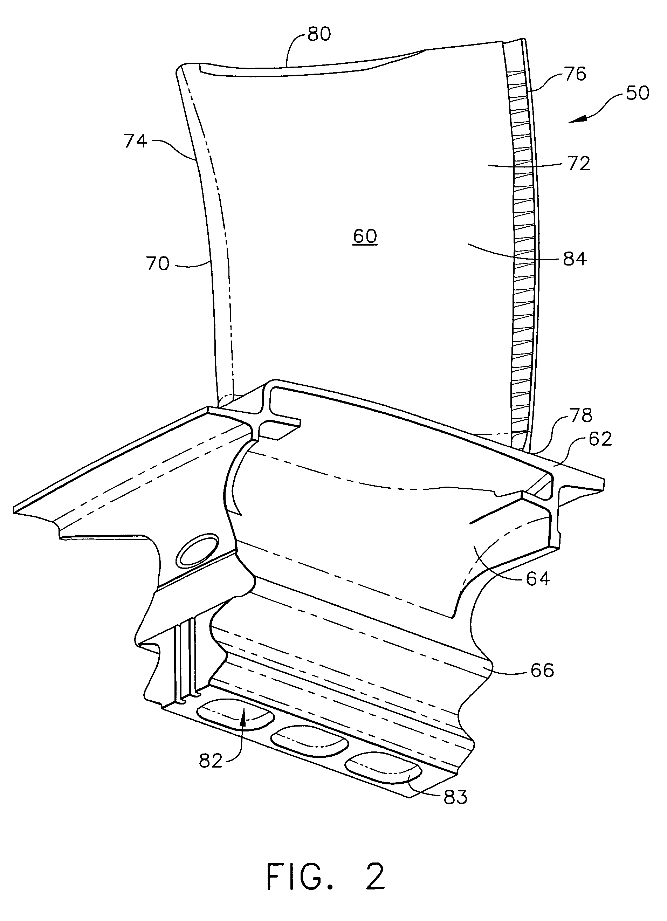

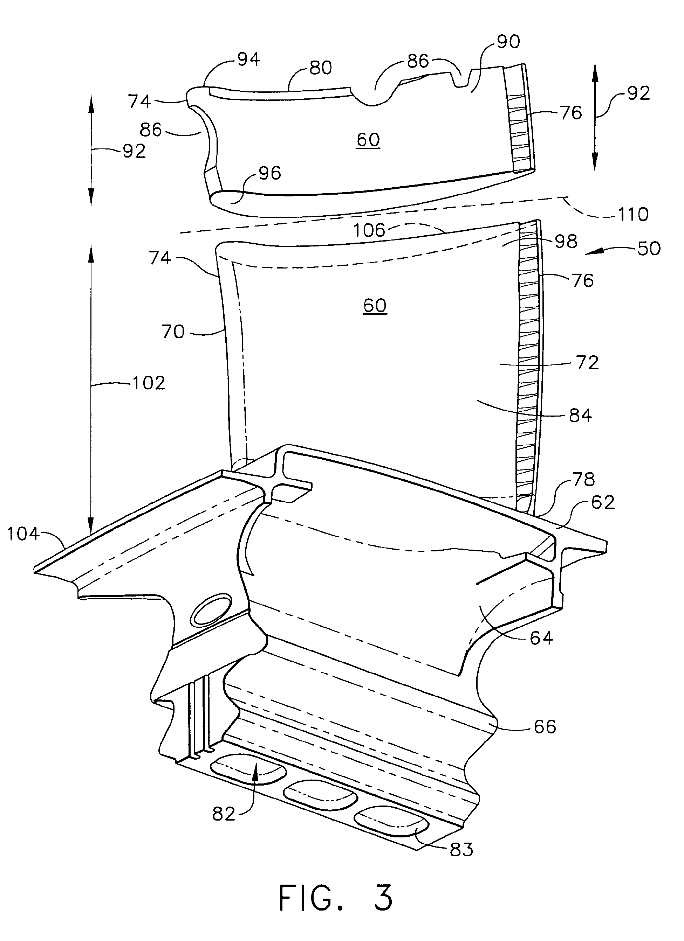

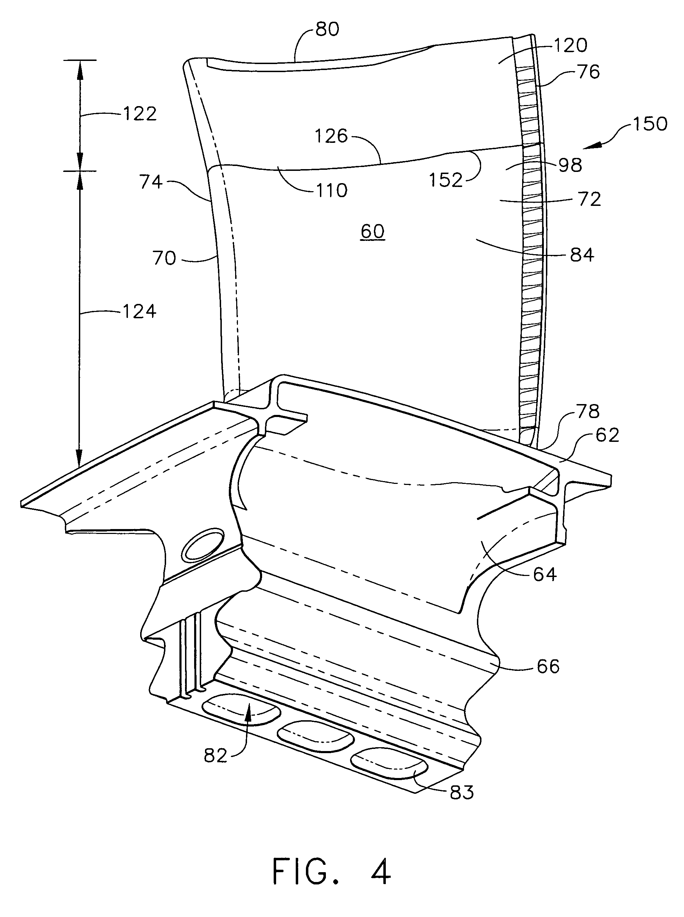

Figure 2 is an enlarged perspective view of an exemplary rotor blade 50 that may be used with gas turbine engine 10 (shown in Figure 1). Figure 3 is an enlarged perspective view of a damaged rotor blade 50 that may be removed from gas turbine engine 10 (shown in Figure 1). Figure 4 is an enlarged perspective view of blade 50 repaired using the methods described herein. Although only a single rotor blade 50 is shown, it should be realized that turbine engine 10 includes a plurality of rotor blades 50. Each rotor blade 50 includes an airfoil 60, a platform 62, a shank 64, and a dovetail 66.

Each airfoil 60 includes a first sidewall 70 and a second sidewall 72. First sidewall 70 is convex and defines a suction side of airfoil 70, and second sidewall 72 is concave and defines a pressure side of airfoil 60. Sidewalls 70 and 72 are joined at a leading edge 74 and at an axially-spaced trailing edge 76 of airfoil 60. More specifically, airfoil trailing edge 76 is spaced chord-wise and downstream from airfoil leading edge 74.

First and second sidewalls 70 and 72, respectively, extend longitudinally or radially outward in span from a blade root 78 positioned adjacent platform 62, to an airfoil tip 80. Airfoil tip 80 defines a radially outer boundary of an internal cooling chamber 82. Cooling chamber 82 is bounded within airfoil 60 between sidewalls 70 and 72, and extends through platform 62 and through shank 64 and into dovetail 66. More specifically, airfoil 60 includes an inner surface 83 and an outer surface 84, and cooling chamber 82 is defined by airfoil inner surface 83.

Platform 62 extends between airfoil 60 and shank 64 such that each airfoil 60 extends radially outward from each respective platform 62. Shank 64 extends radially inwardly from platform 62 to dovetail 66. Dovetail 66 extends radially inwardly from shank 64 and facilitates securing rotor blade 50 to rotor disk 26.

Deteriorated and/or damaged regions 86 of rotor blade 50 may be removed and replaced using the methods described herein. More specifically, deteriorated and/or damaged regions 86 of airfoil 60 including leading edge 74, trailing edge 76, and airfoil tip 80, may be removed and replaced using the methods described herein. If an engine, such as engine 10, indicates that rotor blade 50 includes at least one damaged and/or deteriorated portion 86 of rotor blade 50 is removed from engine 10 and repaired using the methods described herein.

More specifically, as shown in Figure 3, the exemplary repair method includes machining, or cutting away, an upper damaged portion 90 of airfoil 60. In one embodiment, damaged portion 90 includes a radial height 92 measured from an upper surface 94 of damaged portion 90 to a lower surface 96 of damaged portion 90. After determining height 92, blade 50 is either machined or cut such that damaged portion 90 is separated from the preserved, or remaining, portion 98 of airfoil 60. More specifically, a cut illustrated with line 110 is made through airfoil 60, such that cut 110 extends from leading edge 74 to trailing edge 76, and from first sidewall 70 to second sidewall 72. In another embodiment, damaged portion 90 is defined as extending radially outward of cut line 110 to airfoil tip 80. Any portion of airfoil 60 extending radially outward of cut line 110 is then defined as damaged portion 90, and is removed and replaced with an undamaged upper portion (not shown) using the methods described herein.

Figure 4 is an enlarged perspective view of rotor blade 50 repaired using the methods described herein. After damaged portion 90, of airfoil 60, has been separated from preserved portion 98, a replacement 120 is coupled to portion 98. Replacement blade portion 120 has a height 122 substantially equivalent to height 92 of removed damaged portion 90. More specifically, in the exemplary embodiment, portion 120 is coupled to preserved portion 98. More specifically, portion 120 is resistance welded to preserved portion 98 such that a material 126 used to join portion 120 and preserved portion 98 comes from preserved portion 98 and portion 120. In one embodiment, undamaged upper portion 120 has a predetermined blade contour, defined by opposite sidewalls 70 and 72, that is substantially equivalent to a contour of damaged upper portion 90, such that when undamaged upper portion 120 is coupled to preserved lower portion 98, repaired airfoil 60 has a substantially equivalent contour as its original contour. In another embodiment, undamaged upper portion 120 is coupled to preserved lower portion 98, such that repaired airfoil 60 has a predetermined contour that is improved from the original contour. More specifically, undamaged portion 120 has a predetermined contour that provides an improved aerodynamic shape such that the repaired blade has an improved aerodynamic performance compared to the original blade. Specifically, welding material 126 is formed along line 110 from leading edge 74 to trailing edge 76, and from first 70 to second sidewall 72 along line 110. In the exemplary embodiment, welding material 126 includes at least one of a nickel alloy and a titanium alloy. Welding material 126 is then machined to obtain a desired finished dimension. Machining welding material 126 includes rough-blending, and final-blending the welded replacement, such that repaired compressor rotor blade 150 has a contour that substantially mirrors the contour of damaged compressor rotor blade 50.

In one embodiment, a joint 152 between replacement tip 120 and preserved portion 98 may be configured and placed where it can be a simple geometry, and then welded using a high yield automated process. Additionally, undamaged portion 120 may be fabricated from a material similar to damaged portion 90 thereby more closely matching the original material, i.e. forged vs. cast. In the exemplary embodiment, the methods described herein can be adapted to weld common blade alloys such as, but not limited to, a nickel based alloy, a titanium based alloy, and an iron based alloy, i.e. A286. Additionally, the methods described herein provides superior weld properties and facilitates improving control of the airfoil shape and orientation, while reducing distortion compared to other known compressor blade repair methods. Further, a single weld joint facilitates reducing weld defects since other known methods require multiple pass welding material build up. Accordingly, there is less weld area to fluorescent penetrant inspect or X-ray using the resistance projection weld methods described herein.

Although the repair methods described herein are described in the context of a compressor blade, it should be realized that the methods described herein are equally applicable to turbine rotor blades, power turbine rotor blades, low pressure compressor rotor blades, and fan rotor blades. The repair methods can also be used to repair fan, compressor, or turbine stators if their configuration allows removal of a damaged portion of the stator airfoil.

The above-described airfoil repair methods enable an airfoil having damage and/or deterioration extending along its leading and/or trailing edges, and/or along its airfoil tip, to be repaired in a cost-effective and reliable manner. More specifically, the above-described airfoil repair methods facilitate restoring a damaged and/or deteriorated blade to its original dimensions. Accordingly, using the methods described, the entire top end of the blade is removed. A portion of blade having the same contour as the original blade contour is welded back to the salvaged part of the blade. The repair methods described herein offer a plurality of advantages over known methods. Specifically, turbine engine 10 is returned to service using a repair process that facilitates improved savings in comparison to removing and replacing entire turbine blades, or alternatively adding weld filler metal to the blade tip to build up the tip to a desired dimension.

Exemplary embodiments of blade repair methods are described above in detail. The repair methods are not limited to the specific embodiments described herein, but rather, components and aspects of each repair method may be performed and utilized independently and separately from other repair methods described herein. Moreover, the above-described repair methods can also be used in combination with other repair methods and with other rotor blade or stator components. Specifically, the above-described repair methods can also be used to repair bladed disks, i.e. blisks, integrated disks, and blades in a single component.

## Claims

1. A method for replacing a portion (90) of a gas turbine engine rotor blade (50), the rotor blade having a contour defined by a blade first sidewall (70) and a blade second sidewall (72), said method comprising:
cutting through the rotor blade such that a cut line (110) extends from a leading edge (74) of the blade to a trailing edge (76) of the blade, and between the first sidewall and the second sidewall;
removing the portion of the rotor blade that is radially outward of the cut line; and
coupling a replacement blade portion (120) to remaining blade portion (98) such that a newly formed rotor blade (150) is formed with a predetermined aerodynamic contour.

2. A method in accordance with Claim 1 wherein coupling a replacement blade portion (120) further comprises welding the replacement blade portion to the remaining blade (98).

3. A method in accordance with Claim 2 further comprising machining the weld such that the newly formed rotor blade (150) has a contour that substantially mirrors that of the original blade contour.

4. A method in accordance with Claim 2 further comprising automatically welding the replacement blade portion (120) to the remaining blade portion (98).

5. A method in accordance with Claim 1 wherein coupling a replacement blade portion (120) further comprises coupling a replacement blade portion to the remaining blade portion (98) that is fabricated from a material that is the same material used in fabricating the original rotor blade (50).

6. A method in accordance with Claim 1 wherein cutting through the rotor blade (50) comprises cutting through a least one of a compressor rotor blade and a turbine rotor blade.

7. A method in accordance with Claim 1 wherein coupling a replacement blade portion (120) to a remaining blade portion (98) further comprises coupling the replacement blade portion to the remaining blade portion using a single weld joint (152) extending along the cut line (110).

8. A method for replacing a portion of a gas turbine engine rotor blade (50), the rotor blade including a leading edge (74), a trailing edge (76), a first sidewall (70), and a second sidewall (72), and having a contour defined by the first sidewall and the second sidewall, said method comprising:
uncoupling the rotor blade from the gas turbine engine (10);
cutting through the rotor blade such that a cut line (110) extends from the leading edge to the trailing edge, and between the first sidewall and the second sidewall;
removing the portion of the rotor blade (90) radially outward of the cut line;
coupling a replacement blade portion (120) to the remaining blade portion; and
contouring the replacement blade portion such that a newly formed rotor blade (150) is formed with a predetermined aerodynamic contour.

9. A method in accordance with Claim 8 wherein coupling a replacement blade portion (120) further comprises welding the replacement blade portion to the remaining blade portion (98).

10. A method in accordance with Claim 9 wherein coupling a replacement blade portion (120) further comprises automatically welding the replacement blade portion to the remaining blade portion (98).
